# EUROPEAN PATENT APPLICATION

(11) **EP 4 752 447 A1**
(43) Date of publication of application: **03.06.2026**
(21) Application number: 24905161.6
(22) Date of filing: 24.12.2024
(51) Int. Cl.: F24F 3/153, F24F 3/14

(54) **ROTARY WHEEL DEHUMIDIFICATION DEVICE**

(30) Priority: 16.10.2024 CN 202422501396 U
(71) Applicant: Contemporary Amperex Technology Co., Limited, Ningde, Fujian 352100 (CN)
(72) Inventor: WU, Guidong, Ningde, Fujian 352100 (CN); ZHOU, Li, Ningde, Fujian 352100 (CN); ZHONG, Dabin, Ningde, Fujian 352100 (CN)
(74) Representative: Gong, Jinping
(86) International application number: PCT/CN2024/141917
(87) International publication number: WO 2026/081348

(57) **Abstract**

This application discloses a rotary dehumidification device, and relates to the field of air conditioning technology. The rotary dehumidification device includes a dehumidification passage, a regeneration passage, and a dehumidification module. The dehumidification module includes a primary dehumidification rotor and a first condensation module. The primary dehumidification rotor is rotatably arranged and has a first moisture absorption zone and a first regeneration zone arranged along a circumferential direction of the primary dehumidification rotor, the first moisture absorption zone is located in the dehumidification passage, and the first regeneration zone is located in the regeneration passage. The first condensation module is located upstream of the first moisture absorption zone, and the first condensation module includes a first surface cooler and a second surface cooler located downstream of the first surface cooler, where a refrigeration temperature of the second surface cooler is lower than a refrigeration temperature of the first surface cooler. The technical solution of this application can reduce the energy consumption of the rotary dehumidification device.

## Description

### CROSS-REFERENCE TO RELATED APPLICATIONS

This application claims priority to Chinese Patent Application No. 202422501396.X, filed on October 16, 2024, the entire content of which is incorporated herein by reference.

### TECHNICAL FIELD

This application relates to the field of air conditioning technology, and in particular, to a rotary dehumidification device.

### BACKGROUND

To meet the requirements of production processes, the relative humidity in the production workshops for multiple processes in a battery factory needs to be controlled to satisfy ambient humidity management requirements. In related technologies, a rotary dehumidification device can be utilized to introduce outdoor fresh air, dehumidify the fresh air, and discharge the dehumidified air indoors.

The rotary dehumidification device employs a dehumidification rotor as a core dehumidification structure. The dehumidification rotor is divided into a moisture absorption zone and a regeneration zone. Through rotation of the dehumidification rotor, each region of the dehumidification rotor cycles alternately between the moisture absorption zone and the regeneration zone. The portion of the rotor located in the moisture absorption zone is configured to adsorb moisture from the fresh air to implement dehumidification, while the portion of the rotor rotated to the regeneration zone can be dried with hot air to undergo dehydration regeneration. Currently, the energy consumption for regeneration of the dehumidification rotor is relatively high.

### SUMMARY

This application is intended to provide a rotary dehumidification device to reduce energy consumption of the rotary dehumidification device.

To achieve the above objective, this application proposes a rotary dehumidification device. The rotary dehumidification device includes a dehumidification passage, a regeneration passage, and a dehumidification module, where the dehumidification module includes:
a primary dehumidification rotor, where the primary dehumidification rotor is rotatably arranged and has a first moisture absorption zone and a first regeneration zone arranged along a circumferential direction of the primary dehumidification rotor, the first moisture absorption zone is located in the dehumidification passage, and the first regeneration zone is located in the regeneration passage; and
a first condensation module, where the first condensation module is located upstream of the first moisture absorption zone, and the first condensation module includes a first surface cooler and a second surface cooler located downstream of the first surface cooler, where a refrigeration temperature of the second surface cooler is lower than a refrigeration temperature of the first surface cooler.

In the technical solution of this application, the rotary dehumidification device is provided with the first condensation module located in the dehumidification passage, and the first condensation module is arranged upstream of the first moisture absorption zone of the primary dehumidification rotor. Outdoor fresh air flowing toward the primary dehumidification rotor can first pass through the first condensation module for condensation dehumidification, reducing the temperature and humidity of the fresh air. This reduces the dehumidification load on the primary dehumidification rotor and decreases the moisture absorption amount of the primary dehumidification rotor, thereby lowering the energy consumption for regeneration of the primary dehumidification rotor. Additionally, the first condensation module utilizes multiple surface coolers for step-by-step condensation dehumidification, allowing the airflow to undergo multiple condensation dehumidification processes before reaching the primary dehumidification rotor, thereby improving condensation dehumidification efficiency. Moreover, the refrigeration temperature of the first surface cooler located upstream does not need to be set too low, reducing refrigeration energy consumption, thereby lowering the energy consumption of the rotary dehumidification device.

According to some embodiments of this application, a fin of at least one surface cooler includes a fin body and multiple protruding structures protruding relative to the fin body.

This arrangement is conducive to increasing the surface area of the fin of the surface cooler, increasing the contact area with the airflow, and enhancing airflow disturbance, thereby improving heat exchange efficiency and refrigeration efficiency.

According to some embodiments of this application, the first surface cooler has multiple first fins arranged side by side, the second surface cooler has multiple second fins arranged side by side, and a surface area of the first fins is smaller than a surface area of the second fins.

This arrangement ensures that the second surface cooler located downstream has good heat exchange efficiency and refrigeration efficiency, allowing the airflow to be cooled to a desired temperature after passing through the second surface cooler, thereby ensuring the cooling effect on the airflow. Additionally, there is no need to design an overly complex structure for the first surface cooler, simplifying the structure of the upstream surface cooler and reducing the cost of the rotary dehumidification device.

According to some embodiments of this application, the first surface cooler has multiple first fins arranged side by side, the second surface cooler has multiple second fins arranged side by side, and a spacing between two adjacent second fins is smaller than a spacing between two adjacent first fins.

This arrangement ensures that the second surface cooler located downstream has good heat exchange efficiency and refrigeration efficiency, allowing the airflow to be cooled to a desired temperature after passing through the second surface cooler, thereby ensuring the cooling effect on the airflow. Additionally, there is no need to design an overly complex structure for the first surface cooler, simplifying the structure of the upstream surface cooler and reducing the cost of the rotary dehumidification device.

According to some embodiments of this application, a spacing between two adjacent fins in at least one surface cooler does not exceed 1.8 mm.

This arrangement allows a high arrangement density of fins in the surface cooler, to increase the total heat exchange area of the surface cooler and improve heat exchange efficiency and refrigeration efficiency, thereby ensuring the cooling effect on the airflow.

According to some embodiments of this application, the refrigeration temperature of the second surface cooler is 3°C to 8°C.

This arrangement allows the airflow passing through the first condensation module to be cooled to a low temperature, achieving good cooling and dehumidification effects. This is conducive to reducing the dehumidification load on the primary dehumidification rotor and decreasing the moisture absorption amount of the primary dehumidification rotor, lowering the energy consumption for regeneration of the primary dehumidification rotor.

According to some embodiments of this application, the refrigeration temperature of the first surface cooler is 10°C to 15°C.

This arrangement avoids a large difference between the refrigeration temperature of the first surface cooler and the refrigeration temperature of the second surface cooler, thereby preventing a large temperature difference between the process air passing through the first surface cooler and the second surface cooler. This ensures that the process air can be cooled to a preset temperature by the second surface cooler, improving the refrigeration efficiency of the second surface cooler on the airflow, and reducing energy waste.

According to some embodiments of this application, the rotary dehumidification device further includes a process air passage, where two ends of the process air passage are respectively in communication with the dehumidification passage and the regeneration passage; and
a connection position of the process air passage and the regeneration passage is located upstream of the first regeneration zone to guide part of process air from the dehumidification passage into the regeneration passage.

This arrangement introduces part of the process air from the dehumidification passage into the regeneration passage as regeneration air, increasing the volume of the regeneration air and improving the utilization of the process air.

According to some embodiments of this application, the dehumidification passage has a first connection position located between the first condensation module and the primary dehumidification rotor; and
the rotary dehumidification device includes a first process air passage connecting the first connection position and the regeneration passage, where a connection position of the first process air passage and the regeneration passage is located up stream of the first regeneration zone.

This arrangement utilizes the first process air passage to guide part of the airflow, which has undergone preliminary condensation dehumidification in the dehumidification passage, into the regeneration passage for regeneration treatment of the primary dehumidification rotor, improving the utilization of the process air.

According to some embodiments of this application, along a rotation direction of the primary dehumidification rotor, the primary dehumidification rotor further includes a first cooling zone located between the first regeneration zone and the first moisture absorption zone, and the first process air passage runs through the first cooling zone.

This arrangement utilizes the airflow cooled by the first condensation module to absorb heat from the first cooling zone. This can increase the temperature of the airflow in the first process air passage, thereby reducing the energy consumed to elevate the temperature of the regeneration air. This can also accelerate the cooling efficiency of the first cooling zone, and reduce the temperature difference between the airflow directly flowing to the first moisture absorption zone and the first moisture absorption zone, thereby minimizing thermal offset and reducing energy waste.

According to some embodiments of this application, the first process air passage includes:
a first branch pipe, where the first branch pipe is in communication with the first connection position and runs through the first cooling zone;
a second branch pipe, where the second branch pipe is in communication with an air outlet end of the first branch pipe and the regeneration passage; and
a third branch pipe, where the third branch pipe is in communication with the air outlet end of the first branch pipe and a second connection position of the dehumidification passage, and the second connection position is located downstream of the first moisture absorption zone; and
the rotary dehumidification device further includes a flow distribution control structure disposed in the first process air passage, where the flow distribution control structure is configured to control flow pass states of the second branch pipe and the third branch pipe.

With this approach, the direction of airflow in the first process air passage can be controlled through the flow distribution control structure. According to requirements, the airflow can be controlled to pass through the second branch pipe to the regeneration passage for rotor regeneration, or the airflow can be controlled to pass through the third branch pipe to downstream of the first moisture absorption zone for direct discharge indoors or for further dehumidification by other dehumidification structures. This enhances the flexibility and applicability of the rotary dehumidification device to suit different operating conditions.

According to some embodiments of this application, the dehumidification module further includes a secondary dehumidification rotor, where the secondary dehumidification rotor has a second moisture absorption zone and a second regeneration zone arranged along a circumferential direction of the secondary dehumidification rotor; and
along a flow direction of airflow in the dehumidification passage, the second moisture absorption zone is located downstream of the first moisture absorption zone, and the regeneration passage runs through the second regeneration zone.

This arrangement provides two dehumidification rotors to perform multiple dehumidification treatments on the airflow, enhancing the dehumidification effect of the airflow.

According to some embodiments of this application, the dehumidification module further includes a second condensation module located between the first moisture absorption zone and the second moisture absorption zone.

This arrangement allows the airflow flowing toward the secondary dehumidification rotor to first pass through the second condensation module for condensation dehumidification, reducing the temperature and humidity of the airflow. This can reduce the dehumidification load on the secondary dehumidification rotor, and can also decrease the moisture absorption amount of the secondary dehumidification rotor, lowering the energy consumption for regeneration of the secondary dehumidification rotor.

According to some embodiments of this application, the dehumidification passage has a second connection position located downstream of the second moisture absorption zone; and
the rotary dehumidification device includes a second process air passage connecting the second connection position and the regeneration passage, where a connection position of the second process air passage and the regeneration passage is located upstream of the second regeneration zone.

This arrangement allows process air, which has undergone multi-stage dehumidification in the dehumidification passage, to be guided to the second regeneration zone through the second process air passage for regeneration treatment of the second regeneration zone, improving the utilization of the process air in the dehumidification passage.

According to some embodiments of this application, the dehumidification passage further includes a third connection position located between the first moisture absorption zone and the second moisture absorption zone; and
the rotary dehumidification device further includes a third process air passage connecting the third connection position and the regeneration passage, where a connection position of the third process air passage and the regeneration passage is located upstream of the second regeneration zone.

This arrangement allows process air, which has been dehumidified by the primary dehumidification rotor, to be guided to the second regeneration zone through the third process air passage, improving the utilization of the process air in the dehumidification passage.

According to some embodiments of this application, along a rotation direction of the secondary dehumidification rotor, the secondary dehumidification rotor further includes a second cooling zone located between the second regeneration zone and the second moisture absorption zone, and the third process air passage runs through the second cooling zone.

This arrangement allows the airflow in the third process air passage to absorb heat from the second cooling zone. This can increase the temperature of the airflow in the third process air passage, thereby reducing the energy consumed to elevate the temperature of the regeneration air. This can also accelerate the cooling efficiency of the second cooling zone, and reduce the temperature difference between the airflow flowing to the second moisture absorption zone and the second moisture absorption zone, thereby minimizing thermal offset and reducing energy waste.

According to some embodiments of this application, the dehumidification module further includes a third condensation module located between the primary dehumidification rotor and the exhaust outlet.

This arrangement utilizes the third condensation module to further condense and dehumidify the airflow before the airflow is discharged indoors from the dehumidification passage, improving the dehumidification efficiency and controlling the temperature of the airflow discharged indoors. Certainly, when further dehumidification and temperature regulation are not required, the third condensation module may not be activated.

According to some embodiments of this application, the primary dehumidification rotor has a first surface and a second surface arranged back to back along an axial direction of the primary dehumidification rotor; along a direction from the first surface to the second surface, pore sizes of mesopores of the primary dehumidification rotor are set in a decreasing manner; and
an air inlet end of the first moisture absorption zone is located at the first surface, and an air inlet end of the first regeneration zone is located at the second surface.

With this arrangement, during dehumidification of the airflow, the airflow first passes through a layer with relatively large mesopores near the first surface. Due to the relatively large mesopore size, the specific surface area is increased, allowing more moisture in the airflow to be adsorbed in the layer near the first surface. As the airflow gradually flows toward the second surface, the airflow flows to a layer with relatively small mesopores, allowing smaller water molecules in the airflow to be adsorbed by the primary dehumidification rotor, improving the moisture absorption effect. During regeneration treatment of the first regeneration zone, the regeneration air first comes into contact with the layer with relatively small mesopores for heat exchange, causing moisture in this layer to reach a surface layer region with relatively large mesopores. The dehydration difficulty in the surface layer region is relatively low. The regeneration air, even if its temperature decreases after passing through the previous layer, can still effectively carry out the moisture in the surface layer region, implementing effective dehydration regeneration of the first regeneration zone.

According to some embodiments of this application, the regeneration passage is branched to include multiple primary regeneration pipelines, the first regeneration zone is provided with multiple first regeneration treatment zones along the circumferential direction of the primary dehumidification rotor, and the multiple primary regeneration pipelines are in one-to-one correspondence with the multiple first regeneration treatment zones.

This arrangement allows each primary regeneration pipeline in the regeneration passage to pass through one first regeneration treatment zone. During regeneration treatment of the first regeneration zone, as the primary dehumidification rotor rotates, each first regeneration treatment zone sequentially passes through each primary regeneration pipeline and can be dehumidified multiple times, enhancing the regeneration effect.

According to some embodiments of this application, regeneration air temperatures of the multiple primary regeneration pipelines are set in a decreasing manner along the rotation direction of the primary dehumidification rotor.

With this arrangement, during regeneration treatment of the first regeneration zone, as the primary dehumidification rotor rotates, the regeneration treatment zone in the first regeneration zone first rotates to correspond to a primary regeneration pipeline with a relatively high airflow temperature, so as to be dehumidified with the high-temperature airflow to remove most of the moisture. Then, the regeneration treatment zone rotates to correspond to a regeneration pipeline with a relatively low airflow temperature, so as to be further dehumidified to remove residual moisture with the airflow. Such arrangement requires only localized heating of the first regeneration zone to a high-temperature state, reducing energy consumption for regeneration of the first regeneration zone. Additionally, since the airflow temperature downstream in the rotation direction is relatively low, the temperature of the regenerated rotor is also relatively low. When the regenerated rotor rotates to the first moisture absorption zone, the temperature difference with the airflow in the dehumidification passage is also reduced, minimizing thermal offset between the first moisture absorption zone and the airflow and reducing energy waste.

According to some embodiments of this application, the rotary dehumidification device further includes a fresh air passage, where the fresh air passage is in communication with the regeneration passage, and along a flow direction of airflow in the regeneration passage, a connection position of the fresh air passage and the regeneration passage is located upstream of the first regeneration zone.

This arrangement allows outdoor fresh air to be utilized for drying and regeneration on the first regeneration zone of the primary dehumidification rotor, increasing the volume of regeneration air and improving the regeneration effect.

### BRIEF DESCRIPTION OF DRAWINGS

To describe the technical solutions in the embodiments of this application or in the prior art more clearly, the accompanying drawings required in the description of the embodiments or the prior art are briefly described below. Apparently, the accompanying drawings described below merely illustrate some embodiments of this application, and persons skilled in the art may still derive other drawings from the structures shown in these accompanying drawings without creative efforts.
FIG. 1 is a schematic structural diagram of a rotary dehumidification device according to some embodiments of this application;
FIG. 2 is a schematic structural diagram of another rotary dehumidification device according to some embodiments of this application;
FIG. 3 is a schematic structural diagram of still another rotary dehumidification device according to some embodiments of this application;
FIG. 4 is a schematic structural diagram of still another rotary dehumidification device according to some embodiments of this application;
FIG. 5 is a structural diagram of fins of a first surface cooler in a rotary dehumidification device according to some embodiments of this application;
FIG. 6 is a structural diagram of fins of a second surface cooler in a rotary dehumidification device according to some embodiments of this application;
FIG. 7 is a partial structural diagram of fins of a second surface cooler in a rotary dehumidification device according to some embodiments of this application;
FIG. 8 is a schematic cross-sectional view of a primary dehumidification rotor in a rotary dehumidification device according to some embodiments of this application;
FIG. 9 is a schematic structural diagram of a primary dehumidification rotor in a rotary dehumidification device according to some embodiments of this application;
FIG. 10 is an exploded view of a primary dehumidification rotor in a rotary dehumidification device according to some embodiments of this application;
FIG. 11 is a schematic cross-sectional view of a secondary dehumidification rotor in a rotary dehumidification device according to some embodiments of this application; and
FIG. 12 is a schematic cross-sectional view of another secondary dehumidification rotor in a rotary dehumidification device according to some embodiments of this application.

### Description of reference signs:

100, rotary dehumidification device; 1, dehumidification passage; 11, fresh air inlet; 12, exhaust outlet; 13, first connection position; 14, second connection position; 15, third connection position; 16, fourth connection position;
2, regeneration passage; 21, primary regeneration pipeline; 211, first regeneration pipeline; 212, second regeneration pipeline; 22, mixed air pipeline; 23, first air intake position; 24, second air intake position; 25, third air intake position; 26, secondary regeneration pipeline; 261, third regeneration pipeline; 262, fourth regeneration pipeline; 27, moisture exhaust outlet;
201, first heating structure; 202, second heating structure; 203, third heating structure; 204, fourth heating structure;
3, dehumidification module; 31, primary dehumidification rotor; 311, first moisture absorption zone; 312, first regeneration zone; 3121, first regeneration treatment zone; 3121a, first sub-zone; 313, first cooling zone; 314, first adsorption layer; 315, second adsorption layer; 316, mesopore;
32, first condensation module; 321, first surface cooler; 3211, first fin; 322, second surface cooler; 3221, second fin; 3222, fin body; 3223, protruding structure;
33, secondary dehumidification rotor; 331, second moisture absorption zone; 332, second regeneration zone; 3321, second regeneration treatment zone; 3321a, second sub-zone; 333, second cooling zone;
34, second condensation module; 35, third condensation module;
4, indoor air passage; 41, first return air passage; 42, second return air passage; 43, third return air passage; 5, first process air passage; 51, first branch pipe; 52, second branch pipe; 53, third branch pipe; 54, flow distribution control structure; 541, airflow regulating valve;
6, second process air passage; 7, third process air passage; 8, fresh air passage; 9, fan; and 10, filter.

The realization of the objectives, functional features, and advantages of this application will be further described in conjunction with the embodiments and with reference to the accompanying drawings.

### DESCRIPTION OF EMBODIMENTS

The embodiments of the technical solutions of this application will be described in detail below in conjunction with the accompanying drawings. The following embodiments are merely intended for a clearer description of the technical solutions of this application and therefore are used as just examples which do not constitute any limitations on the protection scope of this application.

Unless otherwise defined, all technical and scientific terms used herein have the same meanings as commonly understood by persons skilled in the technical field of this application; the terms used herein are solely for the purpose of describing specific embodiments and are not intended to limit this application; the terms "include" and "have" and any variations thereof in the specification, claims, and the above description of the drawings of this application are intended to cover non-exclusive inclusion.

In the description of the embodiments of this application, technical terms such as "first" and "second" are used only to distinguish different objects and shall not be understood as indicating or implying relative importance or implying the number, specific order, or primary-secondary relationship of the indicated technical features. In the description of the embodiments of this application, "multiple" means two or more, unless otherwise explicitly and specifically defined.

In this specification, reference to "embodiment" means that specific features, structures, or characteristics described with reference to the embodiment may be incorporated in at least one embodiment of this application. The appearance of this phrase in various positions in the specification does not necessarily refer to the same embodiment, nor does it refer to an independent or alternative embodiment mutually exclusive with other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. Additionally, the character "/" herein generally indicates that the associated objects before and after the character are in an "or" relationship.

In the description of the embodiments of this application, the term "multiple" refers to two or more (including two); similarly, "multiple groups" refers to two or more groups (including two groups), and "multiple pieces" refers to two or more pieces (including two pieces).

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise explicitly specified and defined, technical terms such as "install", "connect", "couple", and "fix" should be understood in a broad sense. For example, they may refer to a fixed connection, a detachable connection, or an integral formation; they may refer to a mechanical connection or an electrical connection; they may refer to a direct connection or an indirect connection through an intermediate medium; they may refer to internal communication between two elements or an interaction relationship between two elements. Persons skilled in the art can understand the specific meanings of the above terms in the embodiments of this application according to specific circumstances.

To meet the requirements of production processes, the relative humidity in the production workshops for multiple processes in a battery factory needs to be controlled to satisfy ambient humidity management requirements. In related technologies, a rotary dehumidification device can be utilized to introduce outdoor fresh air, dehumidify the fresh air, and discharge the dehumidified air indoors.

The rotary dehumidification device employs a dehumidification rotor as a core dehumidification structure. The dehumidification rotor is divided into a moisture absorption zone and a regeneration zone. Through rotation of the dehumidification rotor, each region of the dehumidification rotor cycles alternately between the moisture absorption zone and the regeneration zone. The portion of the rotor located in the moisture absorption zone is configured to adsorb moisture from the fresh air to implement dehumidification, while the portion of the rotor rotated to the regeneration zone can be dried with hot air to undergo dehydration regeneration. Currently, the energy consumption for regeneration of the dehumidification rotor is relatively high.

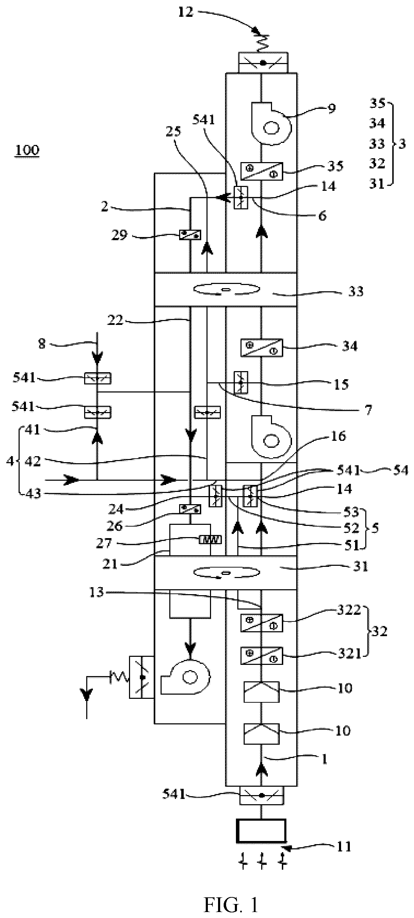

In view of the above issues, referring to FIG. 1 to FIG. 4, this application proposes a rotary dehumidification device 100. The rotary dehumidification device 100 includes a dehumidification passage 1, a regeneration passage 2, and a dehumidification module 3. The dehumidification module 3 includes a primary dehumidification rotor 31 and a first condensation module 32. The primary dehumidification rotor 31 is rotatably arranged and has a first moisture absorption zone 311 and a first regeneration zone 312 arranged along a circumferential direction of the primary dehumidification rotor. The first moisture absorption zone 311 is located in the dehumidification passage 1, and the first regeneration zone 312 is located in the regeneration passage 2. The first condensation module 32 is located upstream of the first moisture absorption zone 311. The first condensation module 32 includes a first surface cooler 321 and a second surface cooler 322 located downstream of the first surface cooler 321, where a refrigeration temperature of the second surface cooler 322 is lower than a refrigeration temperature of the first surface cooler 321.

The dehumidification rotor has the advantages of strong dehumidification capability and large dehumidification capacity. The dehumidification rotor is provided with an adsorption medium, and the dehumidification rotor is divided into a moisture absorption zone and a regeneration zone. Through slow rotation, the dehumidification rotor cycles alternately between the moisture absorption zone and the regeneration zone. During operation, fresh air drawn from outdoors, and fresh air to be processed is dehumidified through the moisture absorption zone. After moisture in the fresh air is adsorbed by the dehumidification rotor, the fresh air becomes dry gas and is then delivered to the workshop factory. The dehumidification rotor, after absorbing moisture, rotates to the regeneration zone and is blown by a high-temperature dry airflow so that the adsorption medium is dehydrated and regenerated. To achieve low-dew-point air supply, the regeneration zone of a rotor dehumidifier requires drying with a high-temperature dry airflow, where the temperature of the high-temperature dry airflow typically exceeds 120°C under some operating conditions.

In the embodiments of this application, the rotary dehumidification device 100 is provided with at least one dehumidification rotor. The dehumidification rotor is the primary dehumidification rotor 31. The primary dehumidification rotor 31 has a moisture absorption zone and a regeneration zone distributed along the circumferential direction. It should be noted that the rotary dehumidification device 100 may be provided with multiple dehumidification rotors, and the primary dehumidification rotor 31 may be the 1st dehumidification rotor along the dehumidification path, or may be the 2nd dehumidification rotor, the 3rd dehumidification rotor, or a dehumidification rotor at another position.

The rotary dehumidification device 100 is provided with a dehumidification passage 1 for introducing outdoor fresh air. The dehumidification passage 1 is provided with a fresh air inlet 11 for outdoor fresh air to enter, and an exhaust outlet 12 for discharging dehumidified airflow. In specific applications, the exhaust outlet 12 is in communication with the indoor environment to discharge the dehumidified airflow indoors. The dehumidification passage 1 may be provided with one or more fans 9 to generate suction for drawing outdoor fresh air and provide power for the airflow to flow within the dehumidification passage 1. When the airflow flows along the dehumidification passage 1 and passes through the primary dehumidification rotor 31, moisture in the airflow is adsorbed in the first moisture absorption zone 311, achieving a dehumidification effect on the airflow. Optionally, the rotary dehumidification device 100 further includes a filter 10 disposed at the fresh air inlet 11, configured to filter the introduced fresh air to remove dust or other impurities from the fresh air, preventing dust and other impurities from being adsorbed onto the dehumidification rotor and other structures of the rotary dehumidification device 100.

The regeneration passage 2 in the rotary dehumidification device 100 is configured for regeneration air to flow through. The regeneration passage 2 runs through the first regeneration zone 312 of the primary dehumidification rotor 31, allowing the regeneration air to dry the adsorption medium in the first regeneration zone 312, implementing dehydration regeneration of the adsorption medium. The regeneration air carrying moisture after passing through the first regeneration zone 312 can be discharged through the moisture exhaust outlet 27 of the regeneration passage 2. The regeneration passage 2 may also be provided with a fan 9 to provide power for the airflow to flow within the regeneration passage 2. Optionally, the regeneration passage 2 may be provided with a heating structure to heat the regeneration air, increasing the temperature of the regeneration air and enhancing the regeneration treatment effect for the first regeneration zone 312. Optionally, a source of the regeneration air in the regeneration passage 2 may include, but is not limited to, at least one of indoor return air, outdoor fresh air, and process air from the dehumidification passage 1.

In the embodiments of this application, a first condensation module 32 is disposed between the fresh air inlet 11 and the primary dehumidification rotor 31. This allows outdoor fresh air flowing toward the primary dehumidification rotor 31 to first pass through the first condensation module 32 for condensation dehumidification, causing the fresh air to release condensed water, and reducing the temperature and humidity of the fresh air. As a result, the dehumidification load on the primary dehumidification rotor 31 is reduced, and the moisture absorption amount of the primary dehumidification rotor 31 is also reduced, lowering the energy consumption for regeneration of the primary dehumidification rotor 31. The first condensation module 32 includes two or more surface coolers. Multiple surface coolers are utilized for step-by-step condensation dehumidification, allowing the airflow to undergo multiple condensation dehumidification processes before reaching the primary dehumidification rotor 31, improving condensation dehumidification efficiency.

Additionally, the refrigeration temperature of the surface cooler located upstream is set higher than the refrigeration temperature of the surface cooler located downstream. Specifically, taking the first condensation module 32 having a first surface cooler 321 and a second surface cooler 322 located downstream of the first surface cooler 321 as an example, a refrigeration temperature of the first surface cooler 321 is a first temperature, and a refrigeration temperature of the second surface cooler 322 is a second temperature, where the first temperature is higher than the second temperature. The fresh air entering the dehumidification passage 1 first passes through the first surface cooler 321, so as to be cooled to the first temperature. The airflow at the first temperature then passes through the second surface cooler 322, so as to be cooled to the second temperature. With this arrangement, when the first condensation module 32 is needed to cool the fresh air to the second temperature, there is no need to set the refrigeration temperature of the first surface cooler 321 to the lower second temperature, reducing refrigeration energy consumption. On the other hand, the refrigeration temperature of the first surface cooler 321 can be set relatively high, avoiding a large temperature difference between the first surface cooler 321 and the fresh air that would lead to significant thermal offset, thereby reducing energy waste by minimizing thermal offset. Similarly, since the airflow is first cooled to the first temperature by the first surface cooler 321, the temperature difference between the airflow flowing to the second surface cooler 322 and the second surface cooler 322 can also be reduced, improving the refrigeration efficiency of the second surface cooler 322 on the airflow and reducing energy waste.

It can be understood that the first condensation module 32 may be provided with three or more surface coolers. With the arrangement of this embodiment, the refrigeration temperature of the upstream surface cooler does not need to be set too low, and each surface cooler has high refrigeration efficiency and low energy waste, effectively reducing refrigeration energy consumption.

In other words, in the technical solution of this application, the rotary dehumidification device 100 is provided with the first condensation module 32 located in the dehumidification passage 1. The first condensation module 32 is disposed upstream of the first moisture absorption zone 311 of the primary dehumidification rotor 31. Outdoor fresh air flowing toward the primary dehumidification rotor 31 can first pass through the first condensation module 32 for condensation dehumidification, reducing the temperature and humidity of the fresh air. This reduces the dehumidification load on the primary dehumidification rotor 31 and decreases the moisture absorption amount of the primary dehumidification rotor 31, thereby lowering the energy consumption for regeneration of the primary dehumidification rotor 31. Additionally, the first condensation module 32 utilizes multiple surface coolers for step-by-step condensation dehumidification, allowing the airflow to undergo multiple condensation dehumidification processes before reaching the primary dehumidification rotor 31, improving condensation dehumidification efficiency. The refrigeration temperature of the first surface cooler 321 located upstream does not need to be set too low, reducing refrigeration energy consumption, thereby lowering the energy consumption of the rotary dehumidification device 100.

Optionally, in some implementations, the rotary dehumidification device 100 is further provided with an indoor air passage 4. The indoor air passage 4 is in communication with a first air intake position 23 of the regeneration passage 2. The indoor air passage 4 is configured to receive indoor return air. The indoor return air can be understood as a mixture of dried fresh air in the workshop and the original air in the workshop. The humidity of the indoor return air is usually lower than the humidity of outdoor fresh air. Relatively dry indoor air is utilized as regeneration air to perform drying and regeneration treatment on the regeneration zone of the dehumidification rotor, and this portion of indoor air can be discharged outdoors through the moisture exhaust outlet 27 of the regeneration passage 2. In this case, the rotary dehumidification device 100 alone can introduce fresh air and expel indoor air to balance indoor air pressure and humidity, maintaining stable indoor air pressure and humidity without the need for additional indoor air exhaust systems. Additionally, the indoor return air with low humidity can be reused. The indoor air has a certain temperature, reducing the energy consumed to elevate the temperature of the regeneration air.

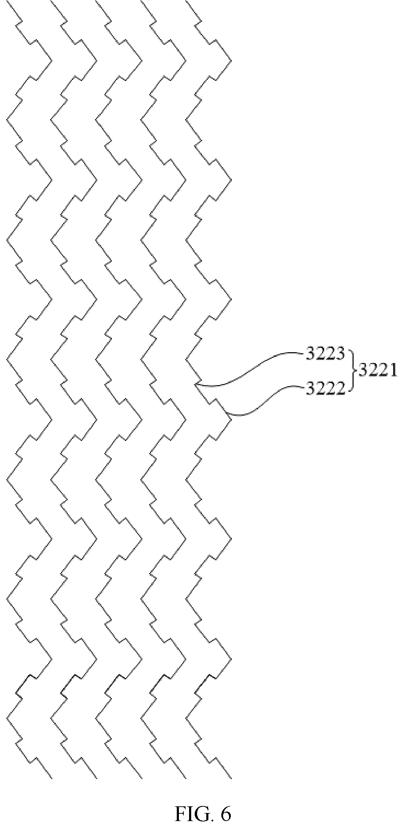

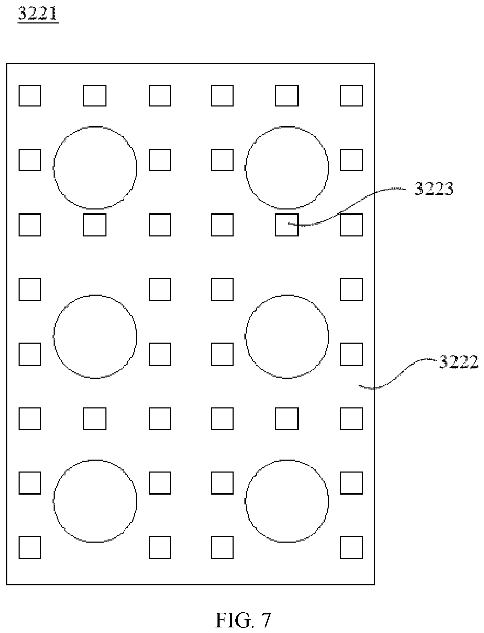

Referring to FIG. 6 and FIG. 7, according to some embodiments of this application, a fin of at least one surface cooler includes a fin body 3222 and multiple protruding structures 3223 protruding relative to the fin body 3222.

In this embodiment, the fin provided in the surface cooler includes the fin body 3222 as the main structure. The fin body 3222 can be regarded as a flat fin structure or a corrugated fin structure. Multiple protruding structures 3223 are disposed on the surface of the fin body 3222, which is conducive to increasing the fin surface area, increasing the contact area with the airflow, and enhancing airflow disturbance, thereby improving heat exchange efficiency and refrigeration efficiency. The shape of the protruding structures 3223 may be rectangular, cylindrical, hemispherical, or other regular or irregular shapes. One surface cooler may be provided with protruding structures 3223 of one shape, or may be provided with protruding structures 3223 of different shapes.

Optionally, in specific applications, the fins of all surface coolers in the first condensation module 32 may be configured as the foregoing fins with protruding structures 3223, or the fins of some surface coolers may be provided with protruding structures 3223, while the fins of other surface coolers are not provided with protruding structures 3223.

Taking the first condensation module 32 having a first surface cooler 321 and a second surface cooler 322 located downstream of the first surface cooler 321 as an example, fins of the second surface cooler 322 may be configured as including a fin body 3222 and protruding structures 3223, while fins of the first surface cooler 321 are not provided with protruding structures 3223, ensuring that the second surface cooler 322 has good heat exchange efficiency and refrigeration efficiency. This allows the airflow to be cooled to a desired temperature after passing through the second surface cooler 322, ensuring the cooling effect on the airflow. Additionally, there is no need to design an overly complex structure for the first surface cooler 321, simplifying the structure of the upstream surface cooler and reducing the cost of the rotary dehumidification device 100.

Certainly, in some implementations, the first surface cooler 321 may alternatively be configured as including a fin body 3222 and protruding structures 3223. Alternatively, the first surface cooler 321 may be configured as including a fin body 3222 and protruding structures 3223, while the fins of the second surface cooler 322 are not provided with protruding structures 3223.

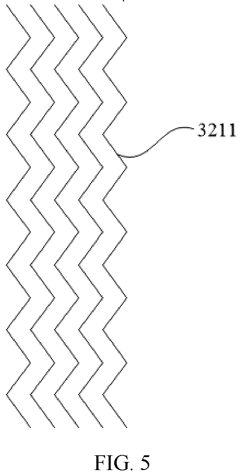

Referring to FIG. 5 and FIG. 6 together, according to some embodiments of this application, the first surface cooler 321 has multiple first fins 3211 arranged side by side, the second surface cooler 322 has multiple second fins 3221 arranged side by side, and a surface area of the first fins 3211 is smaller than a surface area of the second fins 3221.

In this embodiment, the second fins 3221 in the second surface cooler 322 are designed to have a larger surface area, ensuring that the second surface cooler 322 has good heat exchange efficiency and refrigeration efficiency. This allows the airflow to be cooled to a desired temperature after passing through the second surface cooler 322, ensuring the cooling effect on the airflow. Additionally, there is no need to design an overly complex structure for the first surface cooler 321, simplifying the structure of the upstream surface cooler and reducing the cost of the rotary dehumidification device 100.

Optionally, the method of setting the surface area of the first fins 3211 smaller than the surface area of the second fins 3221 may be: setting a length of the first fins 3211 to be shorter than a length of the second fins 3221; or setting the first fins 3211 as flat fins and the second fins 3221 as corrugated fins; or when both the first fins 3211 and the second fins 3221 are configured as corrugated fins, providing protruding structures 3223 on a surface of the fin body 3222 of the second fins 3221.

According to some embodiments of this application, the first surface cooler 321 has multiple first fins 3211 arranged side by side, the second surface cooler 322 has multiple second fins 3221 arranged side by side, and a spacing between two adjacent second fins 3221 is smaller than a spacing between two adjacent first fins 3211.

In this embodiment, the surface coolers provided in the first condensation module 32 are provided with a plurality of fins arranged side by side, and an airflow channel is formed between two adjacent fins, allowing the airflow to exchange heat with the fins on two sides as it flows through the airflow channel. Taking the first condensation module 32 having a first surface cooler 321 and a second surface cooler 322 as an example, the first surface cooler 321 includes multiple first fins 3211 arranged side by side, and the second surface cooler 322 includes multiple second fins 3221 arranged side by side. A fin spacing of the second surface cooler 322 is set small to increase the density of the second fins 3221, thereby increasing the total heat exchange area of the second surface cooler 322 to improve heat exchange efficiency and refrigeration efficiency. In this way, the airflow can be cooled to the required temperature after passing through the second surface cooler 322, guaranteeing the cooling effect on the airflow. The fin spacing between adjacent first fins 3211 is set greater than the fin spacing between adjacent second fins 3221, demonstrating that the structure of the first surface cooler 321 does not need to be overly complex. Instead, a surface cooler with a relatively low refrigeration efficiency can be used as the upstream surface cooler to simplify the structure of the upstream surface cooler, thereby reducing the cost of the rotary dehumidification device 100.

According to some embodiments of this application, a spacing between two adjacent fins in at least one surface cooler does not exceed 1.8 mm.

In this embodiment, among the multiple surface coolers disposed in the first condensation module 32, the spacing between two adjacent fins in at least one surface cooler is set to not exceed 1.8 mm. The fin spacing of this surface cooler may be 1.8 mm, 1.7 mm, 1.6 mm, 1.55 mm, 1.5 mm, 1.4 mm, or any value greater than 0 and not exceeding 1.8 mm. This arrangement allows a high arrangement density of fins in the surface cooler, to increase the total heat exchange area of the surface cooler and improve heat exchange efficiency and refrigeration efficiency, thereby ensuring the cooling effect on the airflow.

In specific applications, the fin spacing of each surface cooler in the first condensation module 32 may be set to not exceed 1.8 mm, or the fin spacing of some surface coolers may be set to not exceed 1.8 mm, while the fin spacing of other surface coolers is set to exceed 1.8 mm.

Taking the first condensation module 32 having a first surface cooler 321 and a second surface cooler 322 located downstream of the first surface cooler 321 as an example, the fin spacing of the second surface cooler 322 may be set to not exceed 1.8 mm to ensure that the second surface cooler 322 has good heat exchange efficiency and refrigeration efficiency. The fin spacing of the first surface cooler 321 may be set larger than the fin spacing of the second surface cooler 322, and the fin spacing of the first surface cooler 321 may be within the range of not exceeding 1.8 mm or may exceed 1.8 mm, for example, may be set to 1.9 mm, 2 mm, 2.1 mm, 2.2 mm, 2.3 mm, 2.4 mm, 2.5 mm, or other values.

Additionally, the fin spacing of the first surface cooler 321 may alternatively be the same as the fin spacing of the second surface cooler 322 or less than the fin spacing of the second surface cooler 322. Alternatively, in some implementations, the fin spacing of the first surface cooler 321 may be set to not exceed 1.8 mm, while the fin spacing of the second surface cooler 322 may be set to exceed 1.8 mm, which is not specifically limited herein.

According to some embodiments of this application, a refrigeration temperature of the second surface cooler 322 is 3°C to 8°C.

In this embodiment, the refrigeration temperature of the second surface cooler 322 may be set to 3°C, 4°C, 5°C, 5.5°C, 6°C, 7°C, 8°C, or any value between 3°C and 8°C. This can be implemented by introducing a low-temperature coolant of a corresponding temperature into a coolant flow channel of the second surface cooler 322. The refrigeration temperature of the first surface cooler 321 only needs to be higher than the refrigeration temperature of the second surface cooler 322. For example, when the refrigeration temperature of the second surface cooler 322 is 6°C, the refrigeration temperature of the first surface cooler 321 may be, but is not limited to, 7°C, 8°C, 9°C, 10°C, 11°C, 12°C, 12.5°C, 13°C, 14°C, 15°C, 16°C, or any other value higher than 6°C, which is not limited herein.

This arrangement ensures that the airflow passing through the first condensation module 32 is cooled to a relatively low temperature, providing good cooling and dehumidification effects, and reducing the dehumidification load on the primary dehumidification rotor 31. When this process air is utilized to cool the first cooling zone 313 of the primary dehumidification rotor 31, a good cooling effect can also be achieved. When this process air is utilized as regeneration air for regeneration treatment of the first regeneration zone 312 of the primary dehumidification rotor 31, excessive humidity in the regeneration air can be avoided, ensuring the regeneration treatment effect.

According to some embodiments of this application, a refrigeration temperature of the first surface cooler 321 is 10°C to 15°C.

In this embodiment, the refrigeration temperature of the first surface cooler 321 may be set to 10°C, 11°C, 12°C, 12.5°C, 13°C, 14°C, 15°C, or any value between 10°C and 15°C. This can be implemented by introducing a low-temperature coolant of a corresponding temperature into the coolant flow channel of the first surface cooler 321. This arrangement avoids a large gap between the refrigeration temperature of the first surface cooler 321 and the refrigeration temperature of the second surface cooler 322, preventing a significant temperature difference between the process air after passing through the first surface cooler 321 and the second surface cooler 322. This ensures that the process air can be cooled to a preset temperature by the second surface cooler 322, improving the refrigeration efficiency of the second surface cooler 322 on the airflow, and reducing energy waste.

According to some embodiments of this application, the rotary dehumidification device 100 further includes a process air passage, where two ends of the process air passage are respectively in communication with the dehumidification passage 1 and the regeneration passage 2; and a connection position of the process air passage and the regeneration passage 2 is located upstream of the first regeneration zone 312 to guide part of process air from the dehumidification passage 1 into the regeneration passage 2.

In this embodiment, the process air passage can introduce part of the process air from the dehumidification passage 1 into the regeneration passage 2 as regeneration air, increasing the volume of the regeneration air and improving the utilization of the process air. The connection position of the process air passage and the dehumidification passage 1 may be located downstream of the first moisture absorption zone 311. The process air dehumidified by the primary dehumidification rotor 31 has relatively low humidity, achieving a good regeneration treatment effect.

Additionally, the connection position of the process air passage and the dehumidification passage 1 may be located upstream of the first moisture absorption zone 311, for example, connected to the first connection position 13 between the first condensation module 32 and the first moisture absorption zone 312. In some implementations, the process air passage may alternatively be connected upstream of the first condensation module 32. In this case, the airflow directed to the regeneration passage 2 through the process air passage is fresh air. An airflow regulating valve 541 may be disposed in the process air passage to open the process air passage when the outdoor fresh air is relatively dry and not to open the process air passage when the outdoor fresh air has high humidity. Alternatively, relatively dry indoor air may be introduced, and the humidity of the regeneration air obtained by mixing the indoor air with the fresh air introduced from the dehumidification passage 1 through the process air passage is also lower than the humidity of the fresh air.

Referring to FIG. 1, according to some embodiments of this application, the dehumidification passage 1 has a first connection position 13 located between the first condensation module 32 and the primary dehumidification rotor 31; and the rotary dehumidification device 100 includes a first process air passage 5 connecting the first connection position 13 and the regeneration passage 2, where a connection position of the first process air passage 5 and the regeneration passage 2 is located upstream of the first regeneration zone 312.

In this embodiment, the first process air passage 5 is utilized to guide part of the airflow, which has undergone preliminary condensation dehumidification in the dehumidification passage 1, into the regeneration passage 2 for regeneration treatment of the primary dehumidification rotor 31, improving the utilization of the process air.

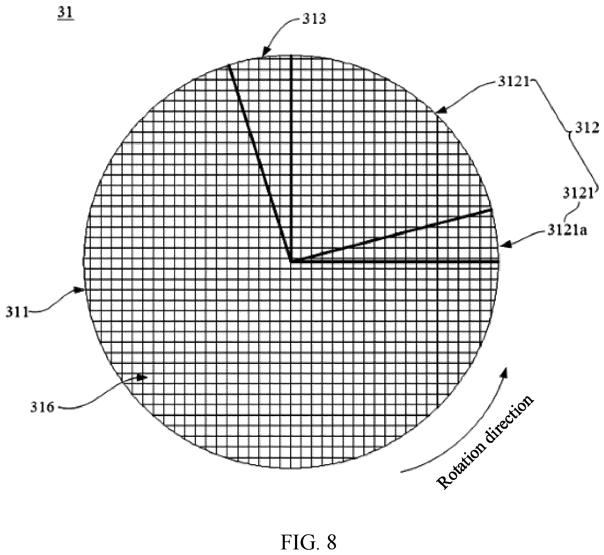

Referring to FIG. 1 and FIG. 8 together, according to some embodiments of this application, along a rotation direction of the primary dehumidification rotor 31, the primary dehumidification rotor 31 further includes a first cooling zone 313 located between the first regeneration zone 312 and the first moisture absorption zone 311, and the first process air passage 5 runs through the first cooling zone 313.

In this embodiment, the primary dehumidification rotor 31 further includes a first cooling zone 313. It can be understood that after the regeneration air is utilized to perform regeneration treatment on the first regeneration zone 312, the temperature of the rotor in the first regeneration zone 312 increases. In this case, the first regeneration zone 312 is first rotated to the position of the first cooling zone 313, allowing this portion of the rotor to undergo a pre-cooling treatment, preventing excessively high temperature of this portion of the rotor from affecting the moisture absorption effect after it rotates to the first moisture absorption zone 311.

In this embodiment, the first process air passage 5 runs through the first cooling zone 313, utilizing the airflow cooled by the first condensation module 32 to absorb heat from the first cooling zone 313. This can increase the temperature of the airflow in the first process air passage 5, thereby reducing the energy consumed to elevate the temperature of the regeneration air. This can also accelerate the cooling efficiency of the first cooling zone 313, and reduce the temperature difference between the airflow directly flowing to the first moisture absorption zone 311 and the first moisture absorption zone 311, thereby minimizing thermal offset and reducing energy waste.

Referring to FIG. 1, according to some embodiments of this application, the first process air passage 5 includes a first branch pipe 51, a second branch pipe 52, and a third branch pipe 53. The first branch pipe 51 is in communication with the first connection position 13 and runs through the first cooling zone 313; the second branch pipe 52 is in communication with an air outlet end of the first branch pipe 51 and a second air intake position 24; and the third branch pipe 53 is in communication with the air outlet end of the first branch pipe 51 and a second connection position 14 of the dehumidification passage 1, and the second connection position 14 is located downstream of the first moisture absorption zone 311. The rotary dehumidification device 100 further includes a flow distribution control structure 54 disposed in the first process air passage 5, where the flow distribution control structure 54 is configured to control flow pass states of the second branch pipe 52 and the third branch pipe 53.

In this embodiment, the flow pass state of the second branch pipe 52 refers to the open or closed state of the second branch pipe 52 and the opening degree of the second branch pipe 52, and the flow pass state of the third branch pipe 53 refers to the open or closed state of the third branch pipe 53 and the opening degree of the third branch pipe 53. For example, the second branch pipe 52 and the third branch pipe 53 can both be controlled to be closed, in which case the process air in the dehumidification passage 1 is not drawn out by the first process air passage 5. Alternatively, one of the second branch pipe 52 and the third branch pipe 53 can be controlled to be open, while the other can be controlled to be closed, directing the airflow from the first branch pipe 51 into the opened branch pipe. Additionally, the opening degrees of the second branch pipe 52 and the third branch pipe 53 can be controlled to distribute the volumes of air flowing into the second branch pipe 52 and the third branch pipe 53.

The flow distribution control structure 54 may include a control valve disposed in the second branch pipe 52 and a control valve disposed in the third branch pipe 53, controlling the flow pass states of the corresponding branch pipes through the control valves. The flow distribution control structure 54 may alternatively be configured as a three-way valve, where an air inlet of the three-way valve is in communication with the air outlet end of the first branch pipe 51, and two air outlets of the three-way valve are respectively in communication with the second branch pipe 52 and the third branch pipe 53. The flow pass states of the second branch pipe 52 and the third branch pipe 53 are controlled by controlling the open/closed state and opening degrees of the two air outlets of the three-way valve.

Part of the process air subjected to condensation treatment in the first condensation module 32 is drawn from the dehumidification passage 1 through the first branch pipe 51, and the flow distribution control structure 54 controls the direction of the process air. The airflow can be controlled to pass through the second branch pipe 52 to the regeneration passage 2 for rotor regeneration, or the airflow can be controlled to pass through the third branch pipe 53 to downstream of the first moisture absorption zone 311 for direct discharge indoors or further dehumidification by other dehumidification structures according to demand, adapting to different operating conditions and enhancing the flexibility and applicability of the rotary dehumidification device 100.

In specific applications, when the process air treated by the first condensation module 32 does not need to be utilized, the second branch pipe 52 and the third branch pipe 53 are both controlled to be closed. In this case, the process air in the dehumidification passage 1 is not drawn out by the first process air passage 5.

When only the process air is needed to cool the first cooling zone 313, the second branch pipe 52 is closed, and the third branch pipe 53 is opened, so that this portion of the process air flows through the first cooling zone 313 and then returns to the dehumidification passage 1 through the third branch pipe 53. When the process air is needed to cool the first cooling zone 313 and part of the process air is also needed for regeneration treatment of the first regeneration zone 312, the second branch pipe 52 is opened, and the process air flowing through the first cooling zone 313 flows to the first regeneration zone 312 via the second branch pipe 52, and in this case, the third branch pipe 53 may be closed or opened.

Additionally, in some implementations, the opening mode can be selected based on the humidity of the process air. For example, when another dehumidification structure, such as a condensation module or a dehumidification rotor, is disposed downstream of the first moisture absorption zone 311, in a case that the humidity of outdoor fresh air is high and the humidity of the process air after condensation treatment by the first condensation module 32 remains high, this process air is not suitable for regeneration treatment, and the second branch pipe 52 can be closed and the third branch pipe 53 can be opened, directing the process air in the first branch pipe 51 to the third branch pipe 53 to flow downstream of the first moisture absorption zone 311 for further dehumidification by subsequent dehumidification structures. In a case that the process air after condensation treatment by the first condensation module 32 is relatively dry, the second branch pipe 52 can be opened, directing the process air to the second branch pipe 52 for regeneration treatment of the first regeneration zone 312. In this case, the third branch pipe 53 may be closed or opened.

Referring to FIG. 1, FIG. 3, and FIG. 4, according to some embodiments of this application, the dehumidification module 3 further includes a secondary dehumidification rotor 33. The secondary dehumidification rotor 33 has a second moisture absorption zone 331 and a second regeneration zone 332 arranged along a circumferential direction of the secondary dehumidification rotor. Along a flow direction of airflow in the dehumidification passage 1, the second moisture absorption zone 331 is located downstream of the first moisture absorption zone 311, and the regeneration passage 2 runs through the second regeneration zone 332.

In this embodiment, when fresh air is introduced into the dehumidification passage 1 for dehumidification treatment, the airflow in the dehumidification passage 1 passes through the first moisture absorption zone 311 of the primary dehumidification rotor 31, and part of the water vapor in the airflow is absorbed by the dehumidification medium of the first moisture absorption zone 311. Then, the airflow flows to the second moisture absorption zone 331 of the secondary dehumidification rotor 33, and the dehumidification medium in the second moisture absorption zone 331 absorbs at least part of the remaining water vapor in the airflow to further dehumidify the airflow. Through arrangement of two dehumidification rotors, multiple dehumidification treatments are performed on the airflow, enhancing the dehumidification effect of the airflow. Optionally, along the flow direction of airflow in the dehumidification passage 1, other dehumidification rotors may be disposed downstream of the secondary dehumidification rotor 33. Additionally, other dehumidification rotors may also be disposed between the primary dehumidification rotor 31 and the secondary dehumidification rotor 33.

Optionally, in this embodiment, the first regeneration zone 312 and the second regeneration zone 332 may be disposed in the same regeneration passage 2. For example, the first regeneration zone 312 may be located downstream of the second regeneration zone 332, allowing the regeneration air passing through the second regeneration zone 332 to blow toward the first regeneration zone 312 for regeneration treatment of the first regeneration zone 312, improving the utilization of the regeneration air. In this embodiment, the air intake position of the regeneration passage 2 may be disposed upstream of the second regeneration zone 332, or the first air intake position 23 may be disposed between the first regeneration zone 312 and the second regeneration zone 332; and a third air intake position 25 is disposed upstream of the second regeneration zone 332. Both the first air intake position 23 and the third air intake position 25 may be configured to introduce at least one of indoor air, outdoor fresh air, and process air from the dehumidification passage 1.

When the first regeneration zone 312 and the second regeneration zone 332 are disposed in a same regeneration passage 2, the second regeneration zone 332 may also be located downstream of the first regeneration zone 312, allowing the regeneration air passing through the first regeneration zone 312 to blow toward the second regeneration zone 332 for regeneration treatment of the second regeneration zone 332, similarly improving the utilization of the regeneration air.

In some implementations, two regeneration passages 2 may alternatively be provided, where one regeneration passage 2 runs through the first regeneration zone 312, and the other regeneration passage 2 runs through the second regeneration zone 332 for regeneration treatment of the second regeneration zone 332. A source of the regeneration air passing through the second regeneration zone 332 may be at least one of indoor air, outdoor fresh air, and process air from the dehumidification passage 1.

Referring to FIG. 1, FIG. 3, and FIG. 4, according to some embodiments of this application, along a flow direction of airflow in the regeneration passage 2, the second regeneration zone 332 is located upstream of the first regeneration zone 312.

In this embodiment, the first regeneration zone 312 and the second regeneration zone 332 are located in the same regeneration passage 2, and the second regeneration zone 332 is located downstream of the first regeneration zone 312, allowing the regeneration air passing through the second regeneration zone 332 to blow toward the first regeneration zone 312 for regeneration treatment of the first regeneration zone 312, improving the utilization of the regeneration air. Additionally, the temperature of the regeneration air after regeneration treatment of the second regeneration zone 332 is relatively high, reducing the energy consumed to elevate the temperature of the regeneration air during regeneration of the first regeneration zone 312.

Moreover, since the airflow has already been dehumidified by the primary dehumidification rotor 31, relatively less moisture is absorbed by the secondary dehumidification rotor 33, and the regeneration air that first passes through the second regeneration zone 332 is not excessively humid. Compared to the approach where the regeneration air first passes through the first regeneration zone 312 and then flows to the second regeneration zone 332, this approach prevents poor regeneration treatment effects of the regeneration air on the second regeneration zone 332.

Referring to FIG. 1, FIG. 3, and FIG. 4, according to some embodiments of this application, the rotary dehumidification device 100 has an indoor air passage 4, and the regeneration passage 2 has a first air intake position 23 located between the first regeneration zone 312 and the second regeneration zone 332. The first air intake position 23 is in communication with the indoor air passage 4, and the regeneration passage 2 has a third air intake position 25 located upstream of the second regeneration zone 332.

In this embodiment, the first air intake position 23 for introducing indoor air in the regeneration passage 2 is disposed between the first regeneration zone 312 and the second regeneration zone 332. The regeneration passage 2 further has the third air intake position 25 disposed upstream of the second regeneration zone 332. The third air intake position 25 may be configured to introduce at least one of indoor air, outdoor fresh air, and process air from the dehumidification passage 1.

This arrangement utilizes relatively low-humidity indoor air to mix with the regeneration air flowing through the second regeneration zone 332, reducing the humidity of the airflow flowing from the second regeneration zone 332 to the first regeneration zone 312. This allows the airflow directed to the first regeneration zone 312 to effectively carry away moisture from the first regeneration zone 312, achieving a good drying and regeneration effect.

Referring to FIG. 1, according to some embodiments of this application, the indoor air passage 4 includes a first return air passage 41 and a second return air passage 42. The first return air passage 41 is in communication with the first air intake position 23, and the second return air passage 42 is in communication with the third air intake position 25.

In this embodiment, the regeneration air flowing to the second regeneration zone 332 for regeneration treatment of the second regeneration zone 332 originates from indoor air; and the indoor air passage 4 is provided with a first return air passage 41 connected to the first air intake position 23 and a second return air passage 42 connected to the third air intake position 25. Part of indoor air is directed to the first regeneration zone 312 through the first return air passage 41 for regeneration treatment of the first regeneration zone 312, and part of indoor air is directed to the second regeneration zone 332 through the second return air passage 42 for regeneration treatment of the second regeneration zone 332, improving the utilization of indoor air.

Optionally, the first return air passage 41 and the second return air passage 42 may be independent of each other, or may be connected to a same air intake passage. A control structure may be provided to control the volumes of air flowing from the air intake passage to the first return air passage 41 and the second return air passage 42. For example, regulating valves are respectively provided in the first return air passage 41 and the second return air passage 42, or a three-way valve is provided at the connection position of the air intake passage, the first return air passage 41, and the second return air passage 42, to adjust the volumes of air directed to the first air intake position 23 and the second air intake position 24 according to the dehydration regeneration requirements of the first regeneration zone 312 and the second regeneration zone 332. This ensures good regeneration effects for both the first regeneration zone 312 and the second regeneration zone 332, and also ensures full and efficient utilization of indoor air.

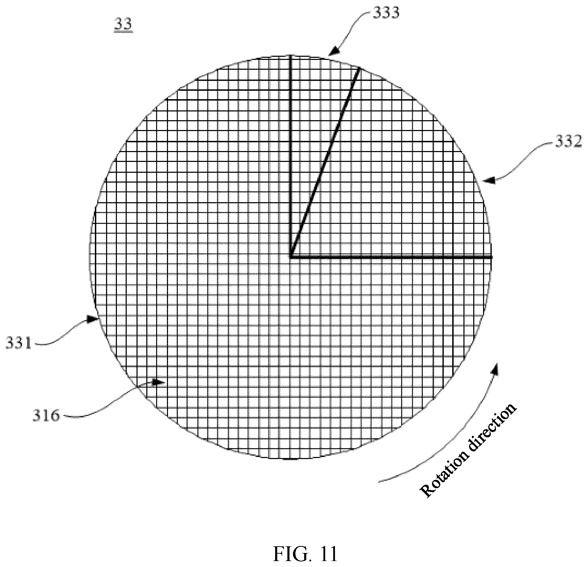

Referring to FIG. 1 and FIG. 11 together, according to some embodiments of this application, along a rotation direction of the secondary dehumidification rotor 33, the secondary dehumidification rotor 33 further includes a second cooling zone 333 located between the second regeneration zone 332 and the second moisture absorption zone 331, where the second return air passage 42 runs through the second cooling zone 333.

In this embodiment, the secondary dehumidification rotor 33 further includes a second cooling zone 333. It can be understood that after the regeneration air is utilized to perform regeneration treatment on the second regeneration zone 332, the temperature of the rotor in the second regeneration zone 332 increases. In this case, the second regeneration zone 332 is first rotated to the position of the second cooling zone 333, allowing this portion of the rotor to undergo a pre-cooling treatment, preventing excessively high temperature of this portion of the rotor from affecting the moisture absorption effect after it rotates to the second moisture absorption zone 331.

In this embodiment, the airflow in the second return air passage 42 absorbs heat from the second cooling zone 333. This can increase the temperature of the airflow in the second return air passage 42, thereby reducing the energy consumed to elevate the temperature of the regeneration air. This can also accelerate the cooling efficiency of the second cooling zone 333, and reduce the temperature difference between the airflow flowing to the second moisture absorption zone 331 and the second moisture absorption zone 331, thereby minimizing thermal offset and reducing energy waste.

Referring to FIG. 1, FIG. 3, and FIG. 4, according to some embodiments of this application, the dehumidification module 3 further includes a second condensation module 34 located between the first moisture absorption zone 311 and the second moisture absorption zone 331.

In this embodiment, the dehumidification module 3 further includes a second condensation module 34. The second condensation module may include one, two, or more than two surface coolers. The airflow flowing from the first moisture absorption zone 311 first passes through the second condensation module 34 for cooling, causing the airflow to release condensed water, providing a cooling and dehumidification effect on the airflow. This can improve the dehumidification effect, reduce the dehumidification load on the secondary dehumidification rotor 33, as well as decrease the moisture absorption amount of the secondary dehumidification rotor 33 to lower the energy consumption for regeneration of the secondary dehumidification rotor 33.

Optionally, the refrigeration temperature of the second condensation module 34 may be set to 10°C to 15°C. In a case that the second condensation module 34 is provided with multiple surface coolers, refrigeration temperatures of the surface coolers may be the same or different. Optionally, the refrigeration temperatures of the multiple surface coolers may be set in a decreasing manner.

Referring to FIG. 1, according to some embodiments of this application, the dehumidification passage 1 has a second connection position 14 located downstream of the second moisture absorption zone 331; and the rotary dehumidification device 100 includes a second process air passage 6 connecting the second connection position 14 and the third air intake position 25.

In this embodiment, the regeneration air flowing to the second regeneration zone 332 for regeneration treatment of the second regeneration zone 332 originates from the process air in the dehumidification passage 1 that has been dehumidified by the primary dehumidification rotor 31 and the secondary dehumidification rotor 33. The rotary dehumidification device 100 is provided with the second process air passage 6. The second process air passage 6 can draw the process air that has undergone multi-stage dehumidification in the dehumidification passage 1 from the second connection position 14 located downstream of the second moisture absorption zone 331 and guide this process air to the third air intake position 25 of the regeneration passage 2 to flow into the regeneration passage 2, allowing the airflow to flow to the second regeneration zone 332 via the regeneration passage 2 for regeneration treatment of the second regeneration zone 332, improving the utilization of the process air in the dehumidification passage 1. The process air that has undergone multi-stage dehumidification is also relatively dry, providing a good regeneration treatment effect on the second regeneration zone 332.

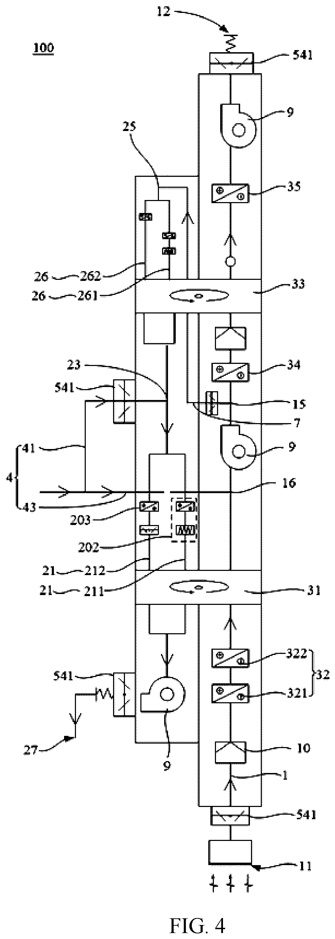

Referring to FIG. 1 and FIG. 4, according to some embodiments of this application, the dehumidification passage 1 further includes a third connection position 15 located between the first moisture absorption zone 311 and the second moisture absorption zone 331; and the rotary dehumidification device 100 further includes a third process air passage 7 connecting the third connection position 15 and the regeneration passage 2, where a connection position of the third process air passage 7 and the regeneration passage 2 is located upstream of the second regeneration zone 332.

In this embodiment, the regeneration air flowing to the second regeneration zone 332 for regeneration treatment of the second regeneration zone 332 originates from the process air in the dehumidification passage 1 that has been dehumidified by the primary dehumidification rotor 31 and the secondary dehumidification rotor 33. The rotary dehumidification device 100 is provided with the third process air passage 7. The third process air passage 7 can draw the process air that has been dehumidified by the primary dehumidification rotor 31 in the dehumidification passage 1 from the third connection position 15 located between the first moisture absorption zone 311 and the second moisture absorption zone 331 and guide this process air to the third air intake position 25 of the regeneration passage 2 to flow into the regeneration passage 2, allowing the airflow to flow to the second regeneration zone 332 via the regeneration passage 2 for regeneration treatment of the second regeneration zone 332, improving the utilization of the process air in the dehumidification passage 1. The process air dehumidified by the primary dehumidification rotor 31 is also relatively dry, providing a good regeneration treatment effect on the second regeneration zone 332.

Referring to FIG. 1 and FIG. 11 together, according to some embodiments of this application, along a rotation direction of the secondary dehumidification rotor 33, the secondary dehumidification rotor 33 further includes a second cooling zone 333 located between the second regeneration zone 332 and the second moisture absorption zone 331, where the third process air passage 7 runs through the second cooling zone 333.

In this embodiment, the process air drawn through the third process air passage 7 first flows to the second cooling zone 333 of the secondary dehumidification rotor 33, and this portion of airflow absorbs heat from the second cooling zone 333. This can increase the temperature of the airflow directed to the third air intake position 25, thereby reducing the energy consumed to elevate the temperature of the regeneration air. This can also accelerate the cooling efficiency of the second cooling zone 333, and reduce the temperature difference between the airflow flowing to the second moisture absorption zone 331 and the second moisture absorption zone 331, thereby minimizing thermal offset and reducing energy waste.

Optionally, in some implementations, the indoor air passage 4 has a second return air passage 42 in communication with the third air intake position 25. An air guide pipeline in communication with the third process air passage 7 and the second return air passage 42 may be provided, where the air guide pipeline is connected to the third air intake position 25, allowing the airflow in the second return air passage 42 to be mixed with the airflow in the third process air passage 7 and then flow to the third air intake position 25. The air guide pipeline can be designed to pass through the second cooling zone 333, eliminating the need for the third process air passage 7 and the second return air passage 42 to separately pass through the second cooling zone 333, thereby simplifying the structural design. Certainly, the third process air passage 7 and the second return air passage 42 may alternatively separately pass through the second cooling zone 333 before connected to the air guide pipeline.

In some implementations, one of the third process air passage 7 and the second return air passage 42 may be designed to run through the second cooling zone 333, which is not limited herein.

Referring to FIG. 1 to FIG. 4, according to some embodiments of this application, the dehumidification module 3 further includes a third condensation module 35 located between the primary dehumidification rotor 31 and the exhaust outlet 12.

In this embodiment, the dehumidification module 3 further includes a third condensation module 35, where the third condensation module 35 may include one, two, or more than two surface coolers. The third condensation module 35 can be utilized to further condense and dehumidify the airflow before the airflow is discharged indoors from the dehumidification passage 1, improving dehumidification efficiency and controlling the temperature of the airflow discharged indoors. Certainly, when further dehumidification and temperature regulation are not required, the third condensation module 35 may not be activated.

In some implementations, the refrigeration temperature of the third condensation module 35 is set to 3°C to 8°C, and may be set to 3°C, 4°C, 5°C, 5.5°C, 6°C, 7°C, 8°C, or any value between 3°C and 8°C, achieving a good cooling effect.

In some implementations, a heating module may be disposed upstream of the exhaust outlet 12 to heat the airflow when the temperature of the dehumidified airflow is low.

Referring to FIG. 1, FIG. 3, and FIG. 4, according to some embodiments of this application, the regeneration passage 2 is branched to include multiple primary regeneration pipelines 21. The first regeneration zone 312 is provided with multiple first regeneration treatment zones 3121 along a circumferential direction of the primary dehumidification rotor 31, and the multiple primary regeneration pipelines 21 are in one-to-one correspondence with the multiple first regeneration treatment zones 3121.

In this embodiment, the regeneration passage 2 includes multiple primary regeneration pipelines 21, and each primary regeneration pipeline 21 runs through one first regeneration treatment zone 3121. During regeneration treatment of the first regeneration zone 312, as the primary dehumidification rotor 31 rotates, each first regeneration treatment zone 3121 sequentially passes through each primary regeneration pipeline 21 to undergo dehydration regeneration treatments by regeneration air from different primary regeneration pipelines 21. This allows the first regeneration zone 312 to be dehumidified multiple times, enhancing the dehydration regeneration effect.

According to some embodiments of this application, regeneration air temperatures of the multiple primary regeneration pipelines 21 are set in a decreasing manner along the rotation direction of the primary dehumidification rotor 31.

In this embodiment, the regeneration air temperatures in various primary regeneration pipelines 21 of the regeneration passage 2 differ. Along the rotation direction of the primary dehumidification rotor 31, the temperature of the regeneration air provided by an upstream primary regeneration pipeline 21 is higher than the temperature of the regeneration air provided by a downstream primary regeneration pipeline 21. With this arrangement, during regeneration treatment of the first regeneration zone 312, as the primary dehumidification rotor 31 rotates, the first regeneration treatment zone 3121 in the first regeneration zone 312 first rotates to correspond to a primary regeneration pipeline 21 with a relatively high airflow temperature, so as to be dehumidified with the high-temperature airflow to remove most of the moisture. Then, the first regeneration treatment zone 3121 rotates to correspond to a primary regeneration pipeline 21 with a relatively low airflow temperature, so as to be further dehumidified to remove residual moisture with the airflow. Such arrangement requires only localized heating of the first regeneration zone 312 to a high-temperature state, reducing energy consumption for regeneration of the first regeneration zone 312. Additionally, since the airflow temperature downstream in the rotation direction is relatively low, the temperature of the regenerated rotor is also relatively low. After regeneration, when the rotor rotates to the first moisture absorption zone 311, the temperature difference with the airflow in the dehumidification passage 1 is reduced, minimizing thermal offset between the first moisture absorption zone 311 and the airflow and reducing energy waste.

Optionally, the method of achieving different regeneration air temperatures in the primary regeneration pipelines 21 may be: providing a heating structure in each primary regeneration pipeline 21. The heating structure in each primary regeneration pipeline 21 heats the airflow in the primary regeneration pipeline 21, raising the regeneration air to the required temperature. A heating efficiency of the heating structure disposed in an upstream primary regeneration pipeline 21 may be set higher than a heating efficiency of the heating structure disposed in a downstream primary regeneration pipeline 21. Additionally, in some implementations, the regeneration passage 2 may be configured as including a mixed air pipeline 22 and multiple primary regeneration pipelines 21, where regeneration air flows from the mixed air pipeline 22 to each primary regeneration pipeline 21; a first heating structure 201 is provided in the mixed air pipeline 22 to heat the regeneration air; and heating structures are respectively provided in the multiple primary regeneration pipelines 21, to heat the regeneration air to the required temperature through the heating structures in the primary regeneration pipelines 21. In some implementations, when a mixed air pipeline is provided and a first heating structure 201 is disposed in the mixed air pipeline, the downstream primary regeneration pipeline 21 may not need a heating structure, and the airflow can be heated to the required temperature through the first heating structure 201 in the mixed air pipeline 22.

Optionally, the first regeneration zone 312 includes two first regeneration treatment zones 3121, where a central angle of the upstream first regeneration treatment zone 3121 may be set to 60° to 75°, and a central angle of the downstream first regeneration treatment zone 3121 may be set to 15° to 30°.

In some implementations, the rotary dehumidification device 100 includes a primary dehumidification rotor 31 and a secondary dehumidification rotor 33. Optionally, the second regeneration zone 332 of the secondary dehumidification rotor 33 may be segmented or not segmented.

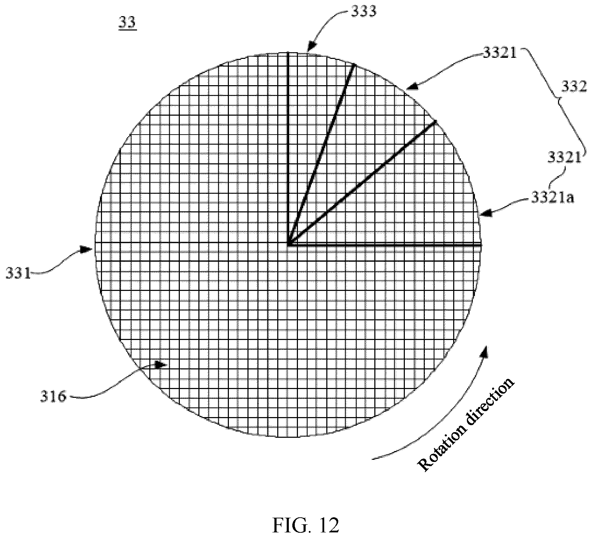

Referring to FIG. 4 and FIG. 12 together, according to some embodiments of this application, the second regeneration zone 332 of the secondary dehumidification rotor 33 includes multiple second regeneration treatment zones 3321 arranged along a circumferential direction of the secondary dehumidification rotor 33, and the regeneration passage 2 is provided with multiple secondary regeneration pipelines 26, where each secondary regeneration pipeline 26 runs through one second regeneration treatment zone 3321.

In this embodiment, the second regeneration zone 332 of the secondary dehumidification rotor 33 is provided with multiple second regeneration treatment zones 3321 along the circumferential direction of the secondary dehumidification rotor 33; and correspondingly, the regeneration passage 2 is provided with multiple secondary regeneration pipelines 26 corresponding to the multiple second regeneration treatment zones 3321 of the secondary dehumidification rotor 33. During regeneration treatment of the second regeneration zone 332, as the secondary dehumidification rotor 33 rotates, each second regeneration treatment zone 3321 sequentially passes through each secondary regeneration pipeline 26 to undergo dehydration regeneration treatment by regeneration air from different secondary regeneration pipelines 26. This allows the second regeneration zone 332 to be dehumidified multiple times, enhancing the dehydration regeneration effect.

In some implementations, regeneration air temperatures of the multiple secondary regeneration pipelines 26 are set in a decreasing manner along the rotation direction of the secondary dehumidification rotor 33.

In this embodiment, the regeneration air temperatures in various secondary regeneration pipelines 26 of the regeneration passage 2 differ. Along the rotation direction of the secondary dehumidification rotor 33, the temperature of the regeneration air provided by an upstream secondary regeneration pipeline 26 is higher than the temperature of the regeneration air provided by a downstream secondary regeneration pipeline 26. With this arrangement, during regeneration treatment of the second regeneration zone 332, as the secondary dehumidification rotor 33 rotates, the second regeneration treatment zone 3321 in the second regeneration zone 332 first rotates to correspond to a secondary regeneration pipeline 26 with a relatively high airflow temperature, so as to be dehumidified with the high-temperature airflow to remove most of the moisture. Then, the second regeneration treatment zone 3321 rotates to correspond to a secondary regeneration pipeline 26 with a relatively low airflow temperature, so as to be further dehumidified to remove residual moisture with the airflow. Such arrangement requires only localized heating of the second regeneration zone 332 to a high-temperature state, reducing energy consumption for regeneration of the second regeneration zone 332. Additionally, since the airflow temperature downstream in the rotation direction is relatively low, the temperature of the regenerated rotor is also relatively low. When the regenerated rotor rotates to the second moisture absorption zone 331, the temperature difference with the airflow in the dehumidification passage 1 is reduced, minimizing thermal offset between the second moisture absorption zone 331 and the airflow and reducing energy waste.

Referring to FIG. 8 and FIG. 12 together, according to some embodiments of this application, an area of a first regeneration treatment zone 3121 adjacent to the first moisture absorption zone 311 does not exceed an area of a second regeneration treatment zone 3321 adjacent to the second moisture absorption zone 331.

In this embodiment, with the first regeneration treatment zone 3121 adjacent to the first moisture absorption zone 311 as a first sub-zone 3121a, in the primary dehumidification rotor 31, a regeneration temperature of the first sub-zone 3121a is higher than a regeneration temperature of any other first regeneration treatment zone 3121 downstream of the first sub-zone 3121a. With the second regeneration treatment zone 3321 adjacent to the second moisture absorption zone 331 as a second sub-zone 3321a, in the secondary dehumidification rotor 33, a regeneration temperature of the second sub-zone 3321a is higher than a regeneration temperature of any other second regeneration treatment zone 3321 downstream of the second sub-zone 3321a.

In this embodiment, an area of the first sub-zone 3121a is set smaller than an area of the second sub-zone 3321a; and when diameters of the primary dehumidification rotor 31 and the secondary dehumidification rotor 33 are the same, a central angle of the first sub-zone 3121a is smaller than a central angle of the second sub-zone 3321a. Additionally, the diameter of the secondary dehumidification rotor 33 may alternatively be set larger than the diameter of the primary dehumidification rotor 31; and when the central angle of the first sub-zone 3121a is the same as the central angle of the second sub-zone 3321a, the second sub-zone 3321a can still be set larger than the first sub-zone 3121a, that is, a high-temperature regeneration region of the secondary dehumidification rotor 33 with a relatively high temperature is larger than a high-temperature regeneration region of the previous-stage rotor regeneration zone. When the moisture absorption amount of the secondary dehumidification rotor 33 is high or the pore size of the secondary dehumidification rotor 33 is relatively small, the dehydration difficulty of the secondary dehumidification rotor 33 is higher than the dehydration difficulty of the primary dehumidification rotor 31. This arrangement allows the secondary dehumidification rotor 33 to achieve a good dehydration regeneration effect by increasing the area of the high-temperature dehumidification region of the secondary dehumidification rotor 33. As for the primary dehumidification rotor 31 with a relatively low dehydration difficulty, the area of the high-temperature regeneration region can be appropriately reduced, lowering energy consumption for regeneration of the first regeneration zone 312.

Referring to FIG. 1 to FIG. 4, according to some embodiments of this application, the regeneration passage 2 further includes a mixed air pipeline 22, where the multiple primary regeneration pipelines 21 are in communication with an outlet end of the mixed air pipeline 22, and the first air intake position 23 is disposed in the mixed air pipeline 22.

In this embodiment, in addition to indoor return air, the regeneration air flowing from the regeneration passage 2 to the first regeneration zone 312 may further include at least one of process air from the dehumidification passage 1, outdoor fresh air, and regeneration air flowing through the second regeneration zone 332. The arrangement of the mixed air pipeline allows various airflows to be uniformly mixed before being distributed to each primary regeneration pipeline 21, ensuring uniform airflow distribution in each primary regeneration pipeline 21 and ensuring good regeneration effects for each regeneration treatment zone. Optionally, in some embodiments, an airflow regulating valve 541 may be disposed to control a volume of air flowing from the mixed air pipeline into each regeneration passage 2.

Referring to FIG. 1, according to some embodiments of this application, the rotary dehumidification device 100 includes a first heating structure 201 disposed in the mixed air pipeline 22.

This arrangement utilizes the first heating structure 201 to heat the regeneration air in the mixed air pipeline before the regeneration air is distributed to each primary regeneration pipeline 21, increasing the temperature of the regeneration air, improving the regeneration effect on the first regeneration zone 312, and reducing the number of heating structures disposed in the primary regeneration pipelines 21. The first heating structure 201 may include at least one of a hot water heating element and an electric heating element.

Referring to FIG. 1 to FIG. 4, according to some embodiments of this application, the multiple primary regeneration pipelines 21 include a first regeneration pipeline 211 and a second regeneration pipeline 212 sequentially arranged along the rotation direction of the primary dehumidification rotor 31; where the rotary dehumidification device 100 further includes a second heating structure 202 disposed in the first regeneration pipeline 211; and the second regeneration pipeline 212 is not provided with a heating structure, or the second regeneration pipeline 212 is provided with a third heating structure 203, where a heating power of the third heating structure 203 is less than a heating power of the second heating structure 202.

With this arrangement, the second heating structure 202 is disposed in the first regeneration pipeline 211 to increase the gas temperature in the first regeneration pipeline 211, so that the second heating structure 202 can be utilized to independently control the airflow temperature in the first regeneration pipeline 211, making the airflow temperature control in the first regeneration pipeline 211 more flexible. The third heating structure 203 with a relatively low heating efficiency can be disposed in the second regeneration pipeline 212 to control the airflow temperature in the second regeneration pipeline 212. Additionally, the gas temperature in the second regeneration pipeline 212 is elevated via the first regeneration pipeline 211, allowing the heating powers of the first heating component and the second heating component to be flexibly controlled and regulated according to actual demand, enhancing temperature regulation flexibility.

In this embodiment, the heating structure disposed in the primary regeneration pipeline 21, such as the second heating structure 202 or the third heating structure 203, may be configured as at least one of a hot water heating element and an electric heating element.

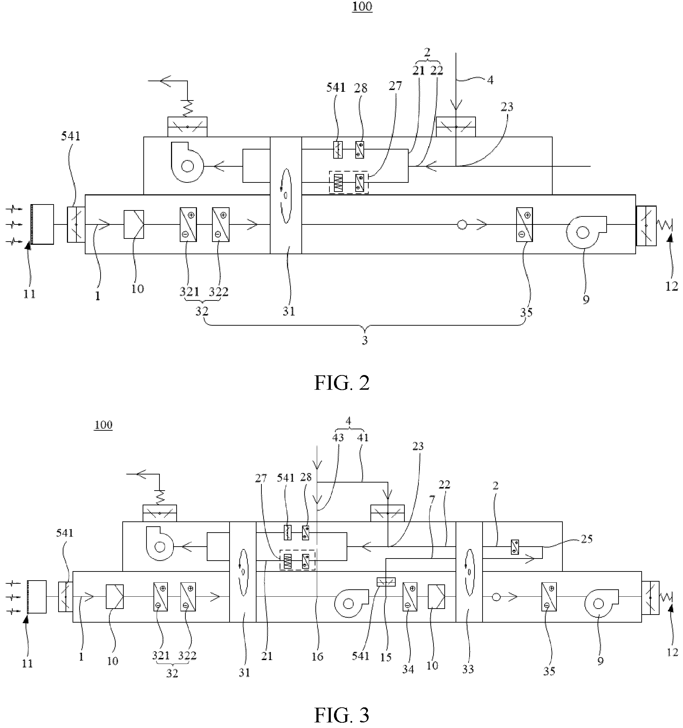

Referring to FIG. 1 and FIG. 3, in some implementations, the rotary dehumidification device 100 is provided with multiple dehumidification rotors, such as a primary dehumidification rotor 31 and a secondary dehumidification rotor 33. A fourth heating structure 204 may be disposed upstream of the second regeneration zone 332, and configured to heat the regeneration air flowing to the second regeneration zone 332, improving the regeneration effect on the second regeneration zone 332.

Additionally, referring to FIG. 4, when the second regeneration zone 332 is provided with multiple second regeneration treatment zones 3321, heating structures can be respectively disposed in the multiple secondary regeneration pipelines 26 of the regeneration passage 2 corresponding to the multiple second regeneration treatment zones 3321. For example, the multiple secondary regeneration pipelines 26 include a third regeneration pipeline 261 and a fourth regeneration pipeline 262 sequentially arranged along a rotation direction of the secondary dehumidification rotor 33. Both the third regeneration pipeline 261 and the fourth regeneration pipeline 262 may be provided with heating structures, or the fourth regeneration pipeline 262 may not be provided with a heating structure. Additionally, a mixed air pipeline 22 in communication with the third regeneration pipeline 261 and the fourth regeneration pipeline 262 may be provided, and a heating structure is disposed in the mixed air pipeline 22.

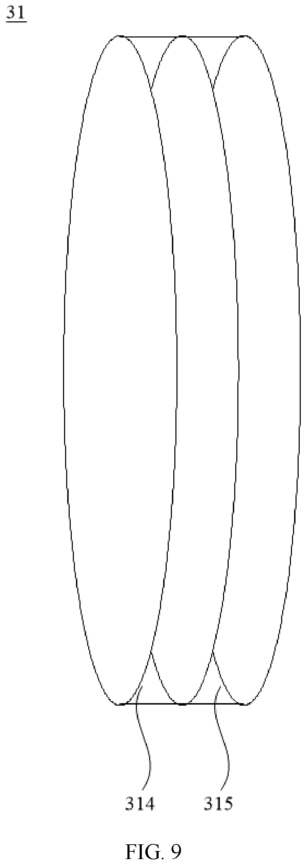

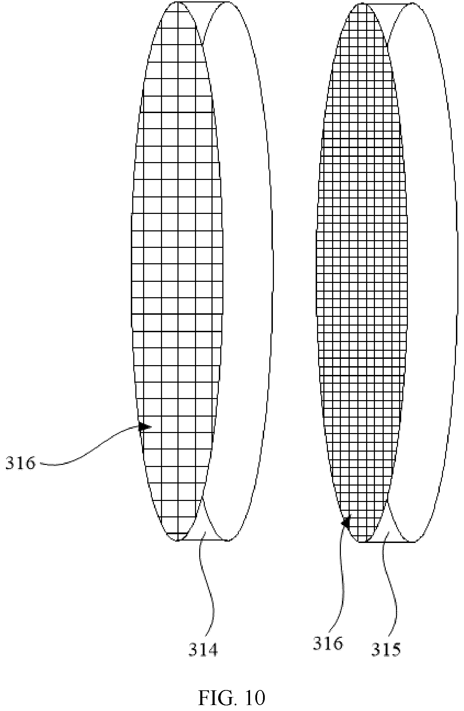

Referring to FIG. 9 and FIG. 10 together, according to some embodiments of this application, the primary dehumidification rotor 31 has a first surface and a second surface arranged back to back along an axial direction of the primary dehumidification rotor 31; along a direction from the first surface to the second surface, pore sizes of mesopores 316 of the primary dehumidification rotor 31 are set in a decreasing manner; and an air inlet end of the first moisture absorption zone 311 is located at the first surface, and an air inlet end of the first regeneration zone 312 is located at the second surface.

The mesopores 316 in the dehumidification rotor refer to a pore structure present in a rotor adsorbent. The presence of the mesopores 316 can increase a large surface area for sufficient contact between humid air and a moisture-absorbing medium, improving dehumidification efficiency. Additionally, the mesopores 316 can increase the adsorption capacity of the adsorbent to provide additional adsorption space, allowing the adsorbent to adsorb more moisture and enhancing the moisture absorption capability of the dehumidification rotor.

In this embodiment, a direction from the first surface to the second surface of the primary dehumidification rotor 31 is a moisture absorption direction of the primary dehumidification rotor 31. Airflow to be dehumidified enters the first moisture absorption zone 311 from the first surface, moisture in the airflow is adsorbed by the primary dehumidification rotor 31, and the dehumidified airflow flows out from the second surface into downstream of the dehumidification passage 1. A direction from the second surface to the first surface is a dehydration direction of the primary dehumidification rotor 31. Regeneration air flows into the first regeneration zone 312 from the second surface, carrying away moisture adsorbed in the first regeneration zone 312, and then flows out from the first surface.

With the above rotor structure, during dehumidification of the airflow, the airflow first passes through a layer with a relatively large mesopore 316 size near the first surface. Due to the relatively larger mesopore 316 size, the specific surface area is increased, allowing more moisture in the airflow to be adsorbed in the layer near the first surface. As the airflow gradually flows toward the second surface, the airflow flows to a layer with a relatively small mesopore 316 size, allowing smaller water molecules in the airflow to be adsorbed by the primary dehumidification rotor 31, improving the moisture absorption effect. During regeneration treatment of the first regeneration zone 312, the regeneration air first comes into contact with the layer with a relatively small pore size for heat exchange, causing moisture in this layer to reach a surface layer region with a relatively large pore size. Since dehydration is less difficult in the surface layer region, the regeneration air, even if its temperature decreases after passing through the previous layer, can still effectively carry away the moisture in the surface layer region, implementing effective dehydration regeneration of the first regeneration zone 312.

During specific arrangement, the primary dehumidification rotor 31 may be formed by stacking multiple adsorption layers. Taking the primary dehumidification rotor 31 having a first adsorption layer 314 and a second adsorption layer 315 as an example, a pore size of mesopores 316 in the first adsorption layer 314 is larger than a pore size of mesopores 316 in the second adsorption layer 315, and the primary dehumidification rotor 31 is formed through stacking, facilitating the preparation of the primary dehumidification rotor 31, and reducing preparation difficulty.

According to some embodiments of this application, mesopores 316 in the secondary dehumidification rotor 33 are smaller than at least some mesopores 316 in the primary dehumidification rotor 31.

In this embodiment, the rotary dehumidification device 100 includes a primary dehumidification rotor 31 and a secondary dehumidification rotor 33; along a flow direction of airflow in the dehumidification passage 1, the second moisture absorption zone 331 of the secondary dehumidification rotor 33 is located downstream of the first moisture absorption zone 311 of the primary dehumidification rotor 31; and along a flow direction of airflow in the regeneration passage 2, the second regeneration zone 332 of the secondary dehumidification rotor 33 is located upstream of the first regeneration zone 312 of the primary dehumidification rotor 31. Through arrangement of two dehumidification rotors, multiple dehumidification treatments are performed on the airflow, enhancing the dehumidification effect of the airflow.

At least some mesopores 316 in the primary dehumidification rotor 31 are set larger than the mesopores 316 in the secondary dehumidification rotor 33. With such arrangement, during the process that the airflow is dehumidified by sequentially passing through the primary dehumidification rotor 31 and the secondary dehumidification rotor 33, the primary dehumidification rotor 31 absorbs most of the moisture in the airflow, and the secondary dehumidification rotor 33 with small pores further dehumidifies the airflow, preventing smaller water molecules in the airflow from passing through the secondary dehumidification rotor 33, thereby ensuring a good dehumidification effect.

Taking the primary dehumidification rotor 31 having a first adsorption layer 314 and a second adsorption layer 315 stacked as an example, mesopores 316 in the first adsorption layer 314 are larger than mesopores 316 in the second adsorption layer 315; and the mesopores 316 in the secondary dehumidification rotor 33 may be smaller than the mesopores 316 in the second adsorption layer 315, or larger than the mesopores 316 in the second adsorption layer 315 but smaller than the mesopores 316 in the first adsorption layer 314, which is not limited herein.

According to some embodiments of this application, a diameter of the secondary dehumidification rotor 33 is larger than a diameter of the primary dehumidification rotor 31. This arrangement allows the secondary dehumidification rotor 33 to have a relatively large specific surface area, enhancing the moisture absorption amount and moisture absorption capability of the secondary dehumidification rotor 33.

According to some embodiments of this application, a thickness of the secondary dehumidification rotor 33 is smaller than a thickness of the primary dehumidification rotor 31. With this arrangement, due to the relatively small mesopores 316 of the secondary dehumidification rotor 33, the thickness of the secondary dehumidification rotor 33 can be reduced, making the moisture adsorbed by the secondary dehumidification rotor 33 easy to be removed with the regeneration air, facilitating dehydration regeneration of the second regeneration zone 332.

Referring to FIG. 1, according to some embodiments of this application, the rotary dehumidification device 100 further includes a fresh air passage 8, where the fresh air passage 8 is in communication with the regeneration passage 2, and along a flow direction of airflow in the regeneration passage 2, a connection position of the fresh air passage 8 and the regeneration passage 2 is located upstream of the first regeneration zone 312.

In this embodiment, the rotary dehumidification device 100 is provided with a fresh air passage 8. An airflow source in the regeneration passage 2 at least includes indoor return air introduced through the indoor air passage 4. Outdoor fresh air can be introduced to perform drying and regeneration on the first regeneration zone 312 of the primary dehumidification rotor 31, increasing the volume of regeneration air and improving the regeneration effect.

In some embodiments, the air flow source in the regeneration channel 2 at least further includes indoor return air introduced through the indoor air channel 4. The airflow source in the regeneration passage 2 may further include process air from the dehumidification passage 1. Both indoor return air and process air are relatively dry. Even if outdoor fresh air is introduced into the regeneration passage 2 as regeneration air, the humidity of the regeneration air mixed with indoor return air and process air is lower than the humidity of the outdoor fresh air. Therefore, even if outdoor fresh air is introduced as regeneration air, this does not cause excessive humidity in the regeneration air or affect the regeneration treatment of the first regeneration zone 312. Additionally, an airflow regulating valve 541 may be disposed in the fresh air passage 8 to reduce, when the humidity of outdoor fresh air is high, the opening degree of the fresh air passage 8 or close the fresh air passage 8 to reduce or stop introduction of fresh air, avoiding excessive humidity of the regeneration air.

Referring to FIG. 1, according to some embodiments of this application, the rotary dehumidification device 100 further includes an airflow regulating valve 541 disposed in the fresh air passage 8, where the airflow regulating valve 541 is configured to control a flow pass state of the fresh air passage 8.

In this embodiment, the flow pass state of the fresh air passage 8 refers to an open or closed state and an opening degree of the fresh air passage 8. The airflow regulating valve 541 is utilized to control the flow pass state of the fresh air passage 8, so as to select, according to demand, whether to introduce outdoor fresh air or control the amount of outdoor fresh air introduced, thereby enhancing usage flexibility. For example, when the humidity of outdoor fresh air is low, the fresh air passage 8 is opened to introduce outdoor fresh air for regeneration treatment of the first regeneration zone 312. When the humidity of outdoor fresh air is high, the opening degree of the fresh air passage 8 is reduced or the fresh air passage 8 is closed to reduce or stop introduction of fresh air, avoiding excessive humidity of the regeneration air.

The above descriptions are merely example implementations of this application and are not intended to limit the patent scope of this application. Any equivalent structural transformations made under the technical concept of this application using the contents of the specification and drawings of this application, or direct/indirect applications in other related technical fields, fall within the patent protection scope of this application.

## Claims

1. A rotary dehumidification device, **characterized by** comprising a dehumidification passage, a regeneration passage, and a dehumidification module, wherein the dehumidification module comprises:
a primary dehumidification rotor, wherein the primary dehumidification rotor is rotatably arranged and has a first moisture absorption zone and a first regeneration zone arranged along a circumferential direction of the primary dehumidification rotor, the first moisture absorption zone is located in the dehumidification passage, and the first regeneration zone is located in the regeneration passage; and
a first condensation module, wherein the first condensation module is located upstream of the first moisture absorption zone, and the first condensation module comprises a first surface cooler and a second surface cooler located downstream of the first surface cooler, wherein a refrigeration temperature of the second surface cooler is lower than a refrigeration temperature of the first surface cooler.

2. The rotary dehumidification device according to claim 1, **characterized in that** a fin of at least one surface cooler compri ses a fin body and multiple protruding structures protruding relative to the fin body.

3. The rotary dehumidification device according to claim 1 or 2, **characterized in that** multiple surface coolers are provided; wherein
the first surface cooler has multiple first fins arranged side by side, the second surface cooler has multiple second fins arranged side by side, and a surface area of the first fins is smaller than a surface area of the second fins.

4. The rotary dehumidification device according to any one of claims 1 to 3, **characterized in that** the first surface cooler has multiple first fins arranged side by side, the second surface cooler has multiple second fins arranged side by side, and a spacing between two adjacent second fins is smaller than a spacing between two adjacent first fins.

5. The rotary dehumidification device according to any one of claims 1 to 4, **characterized in that** a spacing between two adjacent fins in at least one surface cooler does not exceed 1.8 mm.

6. The rotary dehumidification device according to any one of claims 1 to 5, **characterized in that** the refrigeration temperature of the second surface cooler is 3°C to 8°C.

7. The rotary dehumidification device according to claim 6, **characterized in that** the refrigeration temperature of the first surface cooler is 10°C to 15°C.

8. The rotary dehumidification device according to any one of claims 1 to 7, **characterized in that** the rotary dehumidification device further comprises a process air passage, wherein two ends of the process air passage are respectively in communication with the dehumidification passage and the regeneration passage; and
a connection position of the process air passage and the regeneration passage is located upstream of the first regeneration zone to guide part of process air from the dehumidification passage into the regeneration passage.

9. The rotary dehumidification device according to any one of claims 1 to 8, **characterized in that** the dehumidification passage has a first connection position located between the first condensation module and the primary dehumidification rotor; and
the rotary dehumidification device comprises a first process air passage connecting the first connection position and the regeneration passage, wherein a connection position of the first process air passage and the regeneration passage is located upstream of the first regeneration zone.

10. The rotary dehumidification device according to claim 9, **characterized in that** along a rotation direction of the primary dehumidification rotor, the primary dehumidification rotor further comprises a first cooling zone located between the first regeneration zone and the first moisture absorption zone; and
the first process air passage runs through the first cooling zone.

11. The rotary dehumidification device according to claim 10, **characterized in that** the first process air passage comprises:
a first branch pipe, wherein the first branch pipe is in communication with the first connection position and runs through the first cooling zone;
a second branch pipe, wherein the second branch pipe is in communication with an air outlet end of the first branch pipe and the regeneration passage; and
a third branch pipe, wherein the third branch pipe is in communication with the air outlet end of the first branch pipe and a second connection position of the dehumidification passage, and the second connection position is located downstream of the first moisture absorption zone; and
the rotary dehumidification device further comprises a flow distribution control structure disposed in the first process air passage, wherein the flow distribution control structure is configured to control flow pass states of the second branch pipe and the third branch pipe.

12. The rotary dehumidification device according to any one of claims 1 to 11, **characterized in that** the dehumidification module further comprises a secondary dehumidification rotor, wherein the secondary dehumidification rotor has a second moisture absorption zone and a second regeneration zone arranged along a circumferential direction of the secondary dehumidification rotor; and
along a flow direction of airflow in the dehumidification passage, the second moisture absorption zone is located downstream of the first moisture absorption zone, and the regeneration passage runs through the second regeneration zone.

13. The rotary dehumidification device according to claim 12, **characterized in that** the dehumidification module further comprises a second condensation module located between the first moisture absorption zone and the second moisture absorption zone.

14. The rotary dehumidification device according to claim 12 or 13, **characterized in that** the dehumidification passage has a second connection position located downstream of the second moisture absorption zone; and
the rotary dehumidification device comprises a second process air passage connecting the second connection position and the regeneration passage, wherein a connection position of the second process air passage and the regeneration passage is located upstream of the second regeneration zone.

15. The rotary dehumidification device according to any one of claims 12 to 14, **characterized in that** the dehumidification passage further comprises a third connection position located between the first moisture absorption zone and the second moisture absorption zone; and
the rotary dehumidification device further comprises a third process air passage connecting the third connection position and the regeneration passage, wherein a connection position of the third process air passage and the regeneration passage is located upstream of the second regeneration zone.

16. The rotary dehumidification device according to claim 15, **characterized in that** along a rotation direction of the secondary dehumidification rotor, the secondary dehumidification rotor further comprises a second cooling zone located between the second regeneration zone and the second moisture absorption zone, and the third process air passage runs through the second cooling zone.

17. The rotary dehumidification device according to any one of claims 1 to 16, **characterized in that** the dehumidification module further comprises a third condensation module located between the primary dehumidification rotor and the exhaust outlet.

18. The rotary dehumidification device according to any one of claims 1 to 17, **characterized in that** the primary dehumidification rotor has a first surface and a second surface arranged back to back along an axial direction of the primary dehumidification rotor; along a direction from the first surface to the second surface, pore sizes of mesopores of the primary dehumidification rotor are set in a decreasing manner; and
an air inlet end of the first moisture absorption zone is located at the first surface, and an air inlet end of the first regeneration zone is located at the second surface.

19. The rotary dehumidification device according to any one of claims 1 to 18, **characterized in that** the regeneration passage is branched to comprise multiple primary regeneration pipelines, the first regeneration zone is provided with multiple first regeneration treatment zones along the circumferential direction of the primary dehumidification rotor, and the multiple primary regeneration pipelines are in one-to-one correspondence with the multiple first regeneration treatment zones.

20. The rotary dehumidification device according to claim 19, **characterized in that** regeneration air temperatures of the multiple primary regeneration pipelines are set in a decreasing manner along the rotation direction of the primary dehumidification rotor.

21. The rotary dehumidification device according to any one of claims 1 to 20, **characterized in that** the rotary dehumidification device further comprises a fresh air passage, wherein the fresh air passage is in communication with the regeneration passage, and along a flow direction of airflow in the regeneration passage, a connection position of the fresh air passage and the regeneration passage is located upstream of the first regeneration zone.
